# EUROPEAN PATENT APPLICATION

(11) **EP 4 826 330 A1**
(43) Date of publication of application: **21.10.2026**
(21) Application number: 24927999.3
(22) Date of filing: 07.08.2024
(51) Int. Cl.: G01B 11/24, G01B 11/02, G01N 21/88

(54) **EDGE DETECTION METHOD AND APPARATUS FOR BATTERY INSULATION PART, AND BATTERY PRODUCTION LINE**

(30) Priority: 08.03.2024 CN 202410267111
(71) Applicant: Contemporary Amperex Technology Co., Limited, Ningde, Fujian 352100 (CN)
(72) Inventor: HUANG, Wenfang, Ningde, Fujian 352100 (CN); HUANG, Shumao, Ningde, Fujian 352100 (CN); XU, Deming, Ningde, Fujian 352100 (CN); CHEN, Yupei, Ningde, Fujian 352100 (CN)
(74) Representative: Kraus & Lederer PartGmbB
(86) International application number: PCT/CN2024/110291
(87) International publication number: WO 2025/185067

(57) **Abstract**

The present application discloses an edge detection method and apparatus for a battery insulation part, and a battery production line. In the edge detection method for a battery insulation part, the battery insulation part is configured to wrap at least a side surface of a battery cell of a battery. The method includes: enabling at least two light source assemblies to irradiate an edge to be detected of the insulation part; enabling an imaging assembly arranged to face the edge to be detected to image the edge to be detected, so as to obtain an edge image; and identifying the position of the edge to be detected from the edge image. The edge detection method in the present application can solve a problem of performing standardized, stable and reliable edge detection on the battery insulation part, and by making the edge to be detected of the battery insulation part more clearly visible in the edge image, improves accuracy of extracting the edge to be detected from the edge image.

## Description

### CROSS-REFERENCE TO RELATED APPLICATIONS

The present application claims priority to Chinese Patent Application No. 202410267111.2, filed on March 08, 2024 and entitled "EDGE DETECTION METHOD AND APPARATUS FOR BATTERY insulation part, AND BATTERY PRODUCTION LINE", which is incorporated herein by reference in its entirety.

### TECHNICAL FIELD

The present application relates to the field of assembly and detection of battery insulation parts in post-processing of power batteries, and specifically relates to a method and an apparatus for performing edge detection on an insulating film wrapping a battery cell in a battery, and a corresponding battery production line.

### BACKGROUND

With the continuous development of mobile device and electric vehicle industries, the production and manufacturing requirements for power batteries represented by lithium batteries are increasing. During manufacturing of the battery, it is very important to detect the quality of the battery, which also includes the process of coating and encapsulation after the production of the battery cell is completed, that is, it is required to perform the assembly of the bare battery cell wrapping the insulation part before the battery cell is put into the case and the accurate detection of the edge after the assembly.

Typically, the battery insulation part is such as a mylar (Mylar or Mylar) film. Mylar is a polyester polymer with good surface flatness, transparency and mechanical flexibility. In actual production, the mylar film is a translucent flexible thin film sheet (for example, the thickness may be about 0.1 mm), which can greatly increase the insulation performance and strength of the battery cell package and provide reliable sealing and protection for the battery cell. Due to the inherent properties and manufacturing process of the mylar film, the edge of the mylar film cannot exactly correspond to the reference edge of the top cover of the battery cell, that is, there is a certain distance between the edge of the film and the edge of the top cover, so the distance will be used as one of the parameters to determine whether the size and assembly of the mylar film are qualified. Therefore, there is a need for a detection method that can accurately measure such a distance of the film from the edge of the top cover.

In the existing detection process, the area covered with the mylar film is made to be whitish as a whole to form a white area by imaging with different exposure intensities (high exposure intensity combined with low exposure intensity), and then the distance between the white area and the top cover of the battery cell is calculated. The above method has low accuracy, for example, when the background is a pure white bare battery cell, the imaging effect will be affected. Moreover, since there is no standard detailed measurement method, it is not conducive to largescale popularization, and the detection effect will also be uneven.

### SUMMARY

In view of the above problems, the present application provides a method and an apparatus for detecting an edge of a battery insulation part and a corresponding battery production line, which can detect an actual position of the edge of the battery insulation part more finely and accurately through a standardized process of assembling the battery insulation part and detecting an edge of a charge coupled device (CCD), thereby realizing stable detection without background interference.

In a first aspect, the present application provides an edge detection method for a battery insulation part, where the battery insulation part is configured to wrap at least a side surface of a battery cell of a battery, and the method includes: enabling at least two light source assemblies to irradiate an edge to be detected of the insulation part; enabling an imaging assembly arranged to face the edge to be detected to image the edge to be detected, so as to obtain an edge image; and identifying a position of the edge to be detected from the edge image.

In the technical solution of this embodiment of the present application, two or more light source assemblies are disposed at different positions relative to the edge of the battery insulation part, thereby improving an edge imaging effect. The light from the at least two light source assemblies illuminates the edge region of the battery insulation part, and the light from the edge region is incident on the imaging assembly arranged in the horizontal direction of the edge to be detected, so as to obtain more accurate edge imaging and detection results.

In some embodiments, the step of causing the at least two light source assemblies to irradiate the edge to be detected of the insulation part includes irradiating a bent portion of the edge to be detected that is bent in a direction away from the battery cell. In some embodiments, the at least two light source assemblies include a first light source assembly configured to illuminate a first surface of the bent portion away from the battery cell and a second light source assembly configured to illuminate a cross section of the bent portion. In some embodiments, the at least two light source assemblies simultaneously illuminate the bent portion from both sides of the bent portion. The arrangement positions and directions of the two light source assemblies are beneficial to illuminating the edge to be detected as much as possible, thereby improving the imaging quality of the edge image.

In some embodiments, the step of imaging the edge to be detected includes directing an optical signal receiving end of an imaging assembly toward a first surface of the bent portion away from the battery cell. By setting the positional relationship between the front surface of the bent portion of the mylar film and the imaging assembly, it is beneficial to ensuring that as many optical signals reflected from the imaging area as possible are collected.

In some embodiments, the first light source assembly and the second light source assembly are respectively located on two opposite sides of the imaging assembly in a first direction parallel to the axis of the battery cell. By arranging the first light source assembly to irradiate the first surface of the stress-bent portion, shadows are avoided during imaging of the edge region. By arranging the second light source assembly to irradiate the cross section of the bent portion, it is beneficial to displaying a sharper line of the edge to be detected in the imaging, thereby achieving a better imaging effect.

In some embodiments, the first light source assembly is arranged such that the first light beam emitted is at a first angle to the first direction, and the second light source is arranged such that the second light beam emitted is at a second angle to the first direction, the first angle being smaller than the second angle. In particular, the first angle is 34-40 degrees, and the second angle is 28-33 degrees. The angle formed by the stress-bent portion of the mylar film relative to the side surface of the battery cell in the embodiment of the present application is affected by the size of the battery cell, the welding process, the material characteristics, and the like, and the angle is constant for products on the same production line. Therefore, when the included angles of the first light source assembly and the second light source assembly relative to the vertical normal line of the imaging assembly are also set within specific ranges, the front surface and the cross section of the bent portion of the mylar film can be illuminated respectively to achieve an optimized illumination effect.

In some embodiments, the identifying the position of the edge to be detected from the edge image includes: extracting the edge to be detected from the edge image by using an edge detection algorithm; and calculating a distance from the edge to be detected to an edge of a top cover of a battery, where a housing of the battery includes a shell and the top cover. In some embodiments, the extracting the edge to be detected from the edge image using an edge detection algorithm includes: preprocessing the edge image, the preprocessing including: image smoothing, gradient and gradient difference calculation, and non-maximum suppression. Based on the above lighting conditions and imaging results, an image of the edge of the battery insulation part with sharp light reflection may be obtained, and the edge of the battery insulation part is extracted from the edge image by using a data processing method such as a Canny edge detection algorithm, and the distance between the edge and the edge of the top cover as the background is used as a measurement value of the edge to be detected.

In some embodiments, the method further includes: in response to that the distance does not meet a preset threshold condition, sending an error signal indicating that an edge of the insulation part is abnormal. In some embodiments, the method further includes: in response to receiving the error signal, adjusting a process parameter of the insulation part. By setting an error condition, the edge detection and the previous process can be unified, so that the detection result can be used to deduce the problem in the process, and the process parameters can be adjusted according to the problem, thereby forming a standardized production and inspection process.

In a second aspect, the present application provides a method for manufacturing a battery, including: preparing a segment of a battery insulation part, which has an edge in a length direction, the edge comprising a bent portion bent from a first surface of the segment of the battery insulation part to a second surface of the segment of the battery insulation part; wrapping the segment of the battery insulation part to a surface of a battery cell of a battery such that the second surface faces away from the battery cell, and fixing the edge to a fixing apparatus of a top cover of the battery cell; and performing the edge detection method as described in the first aspect.

In the technical solution of the embodiment of the present application, by forming a standardized process for each link from the assembly of the battery insulation part to the edge detection, a more comprehensive battery production process can be realized, where the process parameters of the assembly link are adjusted according to the error signal fed back by the detection link, thereby realizing more accurate preparation and assembly of the insulation part based on the detection result.

In some embodiments, the preparing the segment of the insulation part of the battery includes stamping and cutting the insulation part such that the edge has the bent portion. In some embodiments, the method further includes: calculating a distance from the edge to an edge of the top cover away from the battery cell based on a position of the edge; and in response to that the distance does not meet a preset threshold condition, sending an error signal indicating that the edge of the insulation part is abnormal.

In some embodiments, in response to receiving the error signal, a process parameter for stamping and cutting the insulation part is adjusted. In some embodiments, the process parameter includes a cutter spacing and a stamping pressure. By taking the mylar film as an example, the stamping and cutting process makes the formed mylar film necessarily have an edge region in a micro-bent form, and since the setting of parameters such as the cutter spacing and the stamping pressure will affect the degree of curvature of the edge region, it is visually presented by the edge position of the mylar film. The edge detection in the embodiment of the present application is fed back to the processing of the mylar film, and the cutter spacing and the stamping pressure are adjusted according to the detected edge position and bending degree.

In some embodiments, a color of the segment of the battery insulation part is different from a color of the fixing apparatus of the top cover. For example, when the battery insulation part is a mylar film, compared with the mylar film that is illuminated as an overall white color by the light source assembly, the top cover may be selected as a dark shell that does not reflect light, so that the top cover as an edge imaging background is distinguished from the mylar film, thereby improving the detection accuracy in edge extraction.

In a third aspect, the present application provides a battery production line, including: a preparation apparatus, configured to prepare a segment of a battery insulation part, the segment of the insulation part having an edge in a length direction, the edge comprising a bent portion that is bent from a first surface of the segment of the battery insulation part to a second surface of the segment of the battery insulation part; an assembly apparatus, configured to wrap the segment of the battery insulation part to a surface of a battery cell of a battery such that the second surface faces away from the battery cell, and fix the edge to a fixing apparatus of a top cover of the battery cell; and an edge detection apparatus that performs the edge detection method for a battery insulation part as described in the first aspect.

The above description is merely an overview of the technical solutions of the present application. For a clearer understanding of the technical means of the present application, the present application can be carried out in accordance with the content of the description, and in order to make the above and other objectives, characteristics, and advantages of the present application apparent and comprehensible, specific embodiments of the present application are described below.

### BRIEF DESCRIPTION OF THE DRAWINGS

Various other advantages and benefits will become clear to a person of ordinary skill in the art upon reading the detailed description of the preferred implementations below. The accompanying drawings are used only for the purpose of illustrating the preferred implementations and are not to be construed as limitations on the present application. Moreover, the same reference numerals are used to denote the same components throughout the accompanying drawings. In the accompanying drawings:
FIG. 1A to FIG. 1C are schematic diagrams of assembling a battery insulation part according to some embodiments of the present application;
FIG. 2A to FIG. 2B are schematic structural diagrams of an edge detection apparatus for a battery insulation part according to some embodiments of the present application;
FIG. 3 is a schematic diagram of imaging an edge of a battery insulation part by an edge detection apparatus for a battery insulation part according to some embodiments of the present application;
FIG. 4 is an exemplary configuration diagram of an edge detection apparatus for a battery insulation part according to some embodiments of the present application;
FIG. 5 is a flowchart of an edge detection method for a battery insulation part according to some embodiments of the present application;
FIG. 6 is an exemplary configuration diagram of a battery production line according to some embodiments of the present application; and
FIG. 7 is a flowchart of a method for manufacturing a battery according to some embodiments of the present application.

Reference numerals in specific implementations are as follows:
110, battery insulation part; 120, battery cell; 130, top cover;
1121, edge of battery insulation part; 1122, edge cross-section of battery insulation part; 1123, first surface of edge of battery insulation part; 1301, edge of top cover;
140, cutter; 150, die holder; 1450, cutter spacing.

### DETAILED DESCRIPTION OF PREFERRED EMBODIMENTS

Embodiments of the technical solutions of the present application are described in detail below with reference to the drawings. The following embodiments are only used to more clearly illustrate the technical solutions of the present application, and thus are used as examples only, and are not intended to limit the protection range of the present application.

Unless otherwise defined, all technical and scientific terms used herein have the same meaning as commonly understood by those skilled in the art to which the present application belongs. The terms used in the specification of the present application herein are merely for the purpose of describing specific embodiments and are not intended to limit the present application. The terms "include", "be provided with", and any other variants thereof in the specification, claims, and accompanying drawings of the present application are intended to cover a nonexclusive inclusion.

In the description of the embodiments of the present application, the technical terms "first", "second", and the like are used only for distinguishing between different objects, but cannot be construed to indicate or imply relative importance or implicitly indicate the number, specific order, or primary/secondary relationship of indicated technical features. In the description of the embodiments of the present application, "a plurality of" means two or more unless specifically defined otherwise.

Reference to "an embodiment" herein means that a particular feature, structure, or characteristic described with reference to the embodiment can be included in at least one embodiment of the present application. The phrase in various places in the description does not necessarily all refer to the same embodiment, or a separate or alternative embodiment mutually exclusive of other embodiments. It is explicitly and implicitly understood by a person skilled in the art that the embodiments described herein may be combined with other embodiments.

In the description of the embodiments of the present application, the term "and/or" is only an associative relationship for describing associated objects, indicating that three relationships may be present. For example, A and/or B may indicate the following three cases: presence of only A, presence of both A and B, and presence of only B. In addition, the character "/" herein generally indicates that associated objects are in a "or" relationship.

In the description of the embodiments of the present application, the term "a plurality of" means two or more (including two), and similarly, the term "a plurality of groups" means two or more groups (including two groups), and the term "a plurality of pieces" means two or more pieces (including two pieces).

In the description of the embodiments of the present application, an orientation or positional relationship indicated by technical terms "center", "longitudinal", "transverse", "length", "width", "thickness", "up", "down", "front", "back", "left", "right", "vertical", "horizontal", "top", "bottom", "inner", "outer", "clockwise", "counterclockwise", "axial", "radial", "circumferential", and the like is an orientation or positional relationship shown based on the accompanying drawings, is intended only to facilitate the description of the embodiments of the present application and simplification of the description rather than indicating or implying that an apparatus or an element indicated must have a specific orientation, or be constructed and operated in a specific orientation, and therefore is not intended to be construed as a limitation to the embodiments of the present application.

In the description of the embodiments of the present application, unless otherwise specified and defined explicitly, the terms "mount", "connect", "join", and "fasten" should be understood in their general senses. For example, they may refer to a fixed connection, a detachable connection, or an integral connection, may refer to a mechanical connection or electrical connection, and may refer to a direct connection, an indirect connection via an intermediate medium, or an internal communication between two elements or interaction between two elements. A person of ordinary skill in the art may understand the specific meanings of the above terms in the embodiments of the present application according to specific situations.

At present, in view of the development of the market, the use of traction batteries is becoming increasingly more widespread. Traction batteries are used not only in energy storage power systems such as hydropower, thermal power, wind power, and solar power plants, but also in electric tools such as electric bicycles, electric motorcycles, and electric vehicles, as well as military equipment, aerospace, and many other fields. As an application field of traction batteries continues to expand, a market demand for traction batteries continues to increase.

The manufacturing process of power batteries represented by lithium batteries is extremely complex and the safety requirements are extremely high, so it is particularly important to detect the quality of the batteries, which is beneficial to counting production defects, improving the manufacturing process, and screening out defective products. At present, during the manufacture of lithium batteries, after the manufacture of the battery cell is completed, the battery cell needs to be placed in a hard shell to complete the assembly, and there is a risk of scratching the battery cell. Therefore, before the battery cell is placed in the aluminum housing, the battery cell needs to be covered with an insulating material of a suitable material to prevent the battery cell from being damaged by the shell. Generally, the battery insulation part may be made of a material having good surface flatness, heat resistance and mechanical flexibility, and also having good transparency, and thus is widely used in the electronic industry, such as being mounted on various electronic components to realize the insulation of the electronic components.

In the field of battery cell manufacturing, the quality of the battery insulation part wrapping the battery cell is unqualified, which is one of the reasons for the unqualified battery quality. The main causes of the quality failure caused by the battery insulation part are as follows: When the battery insulation part is made of a soft material and has static electricity, precise positioning cannot be performed by a conventional positioning mechanism during the covering process, which causes defects such as the battery insulation part being misaligned, the distance from the top cover being too small, the welding spot being welded, and the gluing glue being not firm. Further, the battery insulation part may be detached when being mounted on the electronic component, or the electronic component may be damaged due to excessive pressure during mounting. The conventional mounting and/or detection of the battery insulation part mostly uses manual procedures, which cannot control various parameters in the manufacturing and detection process of the battery insulation part, which is not only inefficient, but also difficult to achieve stable and consistent detection effects among multiple devices. However, the existing automatic detection process adopts a manner of matching different exposure intensities, such as irradiating each side of the battery cell with strong light to detect whether the battery insulation part is misaligned, whether the distance to the top cover is too small, and whether the welding spot is welded, and irradiating the battery cell with weak light to detect whether the battery insulation part is dirty and the glue is not firm, and other problems. This design generally makes the battery insulation part region white as a whole, and the distance between the white region and the top cover of the battery cell as the reference edge is calculated. However, the above method is not accurate and is susceptible to material, for example, a bare battery cell with a pure white background may cause the white region to be indistinguishable from the imaging background, resulting in a non-uniform detection effect.

Based on the above considerations, in order to solve the problem of edge detection of the battery insulation part which is standardized, stable and reliable, the inventor has designed an edge detection method through in-depth research, which eliminates the shadow of the edge region and illuminates the cross section of the battery insulation part by illuminating the edge region of the battery insulation part in at least two directions, and uses a structure such as a black top cover as a background, thereby improving the definition of the edge image, and thus improving the accuracy of edge detection.

One preferred class of materials for the battery insulation part is a soft, flexible mylar film. As a tough polyester polymer, mylar meets the requirements of mechanical flexibility and transparency, and has been widely used in actual production. In particular, in the sheet manufacturing process of the mylar film for battery cell wrapping, due to the size limitation of the mylar film required for the battery cell and the toughness of the mylar as a polymer material, the stamping and cutting will cause the mylar film to form a stress-bent portion with a small size in its edge region. The edge detection method in the embodiment of the present application thus uses the edge having the micro-bent shape as the object to be measured and detected, and uses at least two light source assemblies disposed at different positions, and ensures that the edge of the mylar film is illuminated and there is no shadow that affects the resolution through the cooperation of the light source angles. On this basis, the position and angle of the light source component are fixed, so that the plurality of edges to be detected on the production line are imaged under a uniform illumination condition, which can effectively solve the problem that the detection effect of the existing automatic detection method and device is unstable. Further, based on the detection result of the edge to be detected, it is found that the edge to be detected is abnormal, so as to determine whether the battery cell and/or the mylar film has a defect, or whether the process of the mylar film has a deviation in parameters, so as to realize a standardized process from manufacturing to detection.

It should be understood that other materials may also be used to package the battery cell of the battery, such as a hard shell of a composite material is used as a cell package, and it is not easy to form a stress-bent portion corresponding to the mylar film in the edge region during the actual preparation process, but there is still a cross section with a certain angle with the packaging surface. Correspondingly, the at least two light source assemblies included in the embodiments of the present application may be similarly disposed at different positions relative to the edge, and/or emit light rays at different angles to illuminate the package surface and the cross section close to the edge, respectively, thereby similarly obtaining a clearer edge position from the edge image, and similarly improving the detection accuracy.

The detection method and apparatus disclosed in the embodiments of the present application may be applied to, but are not limited to, a CCD detection system with a battery cell in a case package. The method may be implemented by a hardware apparatus enclosed in a dedicated shell, or may be implemented by a process stored in a computer storage medium. It should be understood that the detection method in the present application is used to detect a mylar film wrapped by a battery cell, but the detection method and apparatus can be equally applied to detect other types of films with similar edges in a micro-bending state, including improving the imaging effect and thus the detection accuracy by eliminating shadows and at least two light sources illuminating the cross section.

Specifically, the embodiments of the present application provide a set of standardized "sheet manufacture-assembly-detection" procedures for the problem of unstable detection effect of the existing detection device. A large amount of data for the mylar film package proves that the detection method can reduce the false rejection rate of the mylar film edge detection of the device from 1.1% to 0.1%, and achieve an order of magnitude improvement. Meanwhile, for the situation of multiple plants, multiple production lines and multiple production devices in production practice, the standardized process flow in combination with a stable and reliable detection system can realize the uniform transverse development of multiple lines in multiple plants and quickly arrange the uniform standard.

For the convenience of description, the following embodiments are illustrated by taking a battery insulation part 110 wrapped on a battery cell 120 according to an embodiment of the present application as an example.

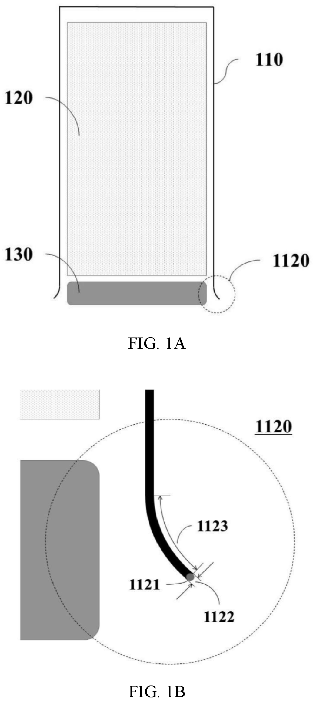

Referring to FIG. 1A to FIG. 1C, FIG. 1A to FIG. 1C are schematic diagrams of assembling a battery insulation part according to some embodiments of the present application. The power battery is generally applied to new energy vehicles, including pure electric vehicles, hybrid vehicles, or extended-range electric vehicles, etc., which require that the assembly of a bare battery cell wrapping the battery insulation part is performed before the battery cell is put into the case, and the accurate detection of the edge of the battery insulation part 110 is performed after the assembly. FIG. 1A shows the positional relationship and wrapping manner of the battery insulation part 110 relative to the battery cell 120, where the battery cell 120 is fixed to the top of the top cover 130, the top cover 130 contains a plastic bracket (not shown) for supporting the battery cell 120, and the battery insulation part edge 1121 is mounted to the top cover 130. It should be understood that the battery further includes a housing (not shown) for packaging the battery cell 120, and the housing includes a shell and a top cover 130, thereby protecting and fixing the battery cell 120. Specifically, the edge of the battery insulation part 1121 may be mounted to the top cover 130 by a welding process, or may be further connected to a fixing apparatus (such as a dedicated battery insulation part clamping structure) in the top cover 130 by means of other fastening manners, to assist in fixing the battery cell 120. FIG. 1B is an enlarged view of the circled region 1120 (i.e., the region near the edge of the battery insulation part) in FIG. 1A, which shows the edge 1121 of the battery insulation part (perpendicular to the paper plane direction) and the edge section 1122 of the battery insulation part.

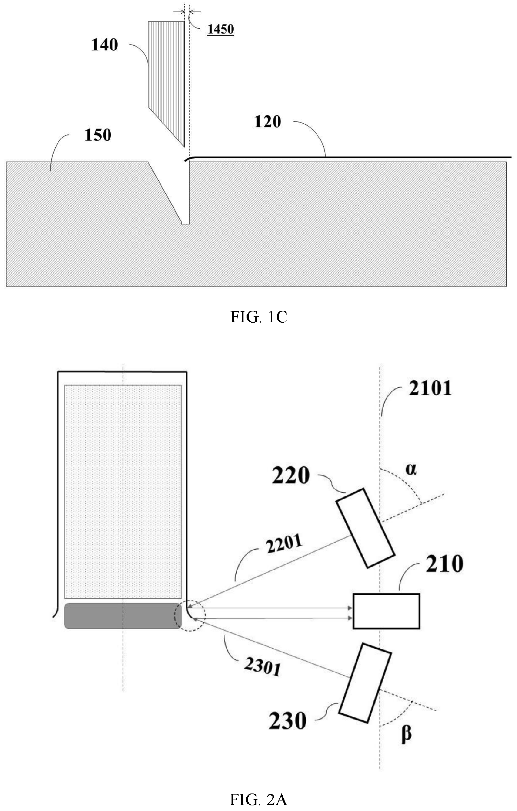

Generally, the bent portion of the battery insulation part 110 refers to a portion that is formed at the edge 1121 of the battery insulation part and bent in a direction away from the battery cell 120 due to the preparation and assembly process during the process of covering the battery insulation part on the battery cell 120. In a non-limiting embodiment, when the battery insulation part 110 is a mylar film, it will produce a bent portion at the edge that is bent away from the battery cell during the sheet manufacturing process, where the side of the bent portion away from the battery cell 120 is shown as the first surface 1123 of the battery insulation part in FIG. 1B. FIG. 1C is a schematic diagram of a process of manufacturing a battery insulation part 110 as a mylar film in FIG. 1A, where a cutter 140 and a die holder 150 for stamping and cutting are shown, and a process of sheet manufacturing a size of the mylar film causes the battery insulation part 110 to form a bent surface at a position where the cutter 140 is in contact with the die holder 150, in other words, an edge to be detected in an edge detection method according to an embodiment of the present application corresponds to a stress-bent portion formed when the mylar film is punched and cut; further, the mylar film is wrapped around the battery cell based on a cell film coating process, so that the first surface 1123 of the bent portion away from the battery cell 120 faces an optical signal receiving end of the imaging assembly described below.

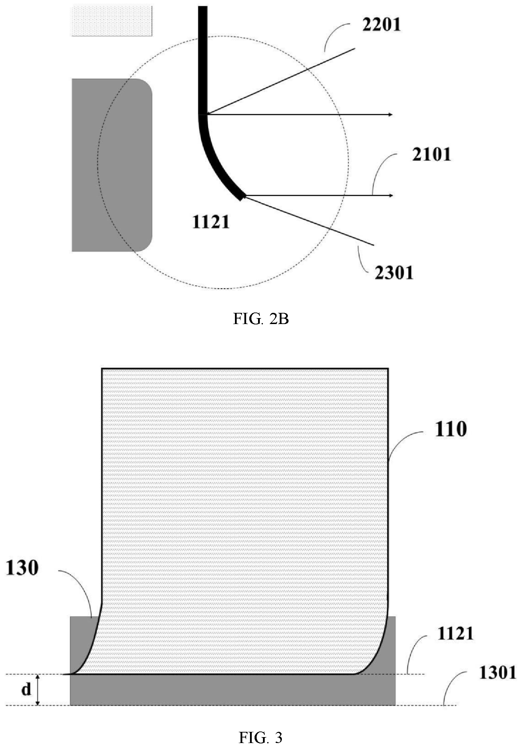

Referring to FIG. 2A and FIG. 2B, FIG. 2A and FIG. 2B are schematic structural diagrams of an edge detection device for a battery insulation part according to some embodiments of the present application, where the same components or structures as those in FIG. 1A to FIG. 1C are not described again. As shown in the figures, the edge detection device includes an imaging assembly 210 and at least two light source assemblies (shown as two light source assemblies in FIG. 2A, which are respectively denoted as a first light source assembly 220 and a second light source assembly 230). Specifically, the imaging assembly 210 is arranged in a horizontal direction relative to the edge of the battery insulation part 1121, and the edge of the battery insulation part 1121 is irradiated using the first light source assembly 220 and the second light source assembly 230.

In some embodiments, the first light source assembly 220 and the second light source assembly 230 are respectively located on two opposite sides of the imaging assembly 210 in a first direction 2101 parallel to the axis of the battery cell . The axis of the battery cell 120 is taken as the vertical direction, and the battery cell 120 is located at the height of the top cover 130 in the vertical direction, so the position of the first light source assembly 220 is higher than the imaging assembly 210, and the position of the second light source assembly 230 is lower than the imaging assembly 210. Specifically, the first light source assembly 220 and the second light source assembly 230 simultaneously irradiate the edge of the battery insulation part 1121 from both sides of the edge of the battery insulation part 1121, such as irradiating the battery insulation part 1121 on both sides above and below the imaging assembly 210, respectively, relative to the edge of the battery insulation part 1121. In a case where the battery insulation part 110 is a mylar film, the stress-bent portion (i.e., the edge 1121) formed by stamping and cutting is away from the direction of the battery cell 120 toward the imaging assembly 210, so that the first light source assembly 220 is particularly irradiated to the first surface 1123 of the bent portion, i.e., the region near the edge 1121 of the battery insulation part. Moreover, the second light source assembly 230 is irradiated to the cross section 1122. Further, to achieve a better irradiation effect, the arrangement direction of the first light source assembly 220 and the second light source assembly 230 should be perpendicular to the plane to be irradiated (or the direction of the plane closest to the object to be irradiated) as much as possible, and due to the angle of the region near the edge 1121 of the battery insulation part with respect to the battery cell 120 having a slight curvature, the first light source assembly 220 is correspondingly arranged such that the included angle between the emitted first light beam 2201 and the first direction 2101 is the first angle α, and the second light source assembly 230 is arranged such that the included angle between the emitted second light beam 2301 and the first direction 2101 is the second angle β. As shown in FIG. 2B, the first light beam 2201 may illuminate the bent portion of the battery insulation part 110 toward the first surface 1123 of the imaging assembly 210, and the second light beam 2301 may illuminate the cross section 1122 of the bent portion from two directions (the first direction 2101), i.e., the upper and lower directions, toward the edge of the battery insulation part 1121 and the vicinity thereof, and the imaging assembly 210 receives the light reflected from these regions, so that the edge of the battery insulation part 1121 is effectively highlighted in the imaging result.

Further, in some embodiments, when the battery insulation part 110 as a mylar film is wrapped around the battery cell 120 based on the battery cell coating process, the feeding process distinguishes the front and back sides of the Mylar film for cutting, and the wrapping manner makes the first surface 1123 of the battery insulation part face the imaging assembly 210, that is, the mylar film is connected to the top cover 130 in a manner that the edge of the mylar film is bent outward. One end of the bent portion of the mylar film corresponding to the edge to be detected is fixed to the top cover 130, so that the cutting edge is located at the battery cell wrapping edge. In a case where parameters such as the cutter spacing 1450 of the cutter 140 and the stamping pressure are fixed, the bent portion has a relatively determined bending angle based on the material, whereby the first angle α and the second angle β may be set accordingly. Generally, the first angle α is different from the second angle β. Due to the welding process of the mylar film 110 to the top cover 130 and the polymeric material properties thereof, the bent portion of the edge of the mylar film due to the stamping and cutting corresponds to the first angle α smaller than the second angle β. In a non-limiting embodiment, the first angle α adopted by the edge detection device is 50 to 56 degrees (or expressed as the angle between the light emitting plane of the first light source assembly 220 and the first direction 2101 is 34 to 40 degrees), and the second angle β is 57 to 62 degrees (or expressed as the angle between the light emitting plane of the second light source assembly 230 and the first direction 2101 is 28 to 33 degrees). In another non-limiting embodiment, the cutter spacing 1450 used in the stamping and cutting process is set to 0.8 to 1.2 mm, and the stamping pressure is set to 0.6 to 1 MPa. It should be understood that, as the size of the mylar film 110 and/or the process parameters of the cutter 140 change, the bending degree of the edge 1121 of the battery insulation part will also change, and accordingly, the first angle α and the second angle β are not limited to the aforementioned numerical ranges, and the position and angle of the light source assembly can be adjusted at any time in accordance with the changes of the parameters in the process.

In some embodiments, the light source assembly (such as first light source assembly 220, second light source assembly 230) may be one or more of a strip coaxial light source, a double ring light source, a single type coaxial light source, and a single ring type coaxial light source. Additionally, the light source assembly includes a white light source. In one non-limiting embodiment, the first light source assembly 220 and the second light source assembly 230 are white strip light sources to match the elongated shape of the edge of the battery insulation part 1121 and provide uniform, high luminance, highly directional illumination. It should be understood that the number of the light source assemblies is not limited to two as shown in FIG. 2A, and more than two light source assemblies may be disposed, and the positions of these light source assemblies are not limited to the upper and lower sides of the imaging assembly 210, and may be disposed at any position around the imaging assembly 210 that can illuminate the edge of the battery insulation part 1121.

In some embodiments, the imaging assembly 210 may include one or more charge coupled devices (CCDs). Additionally or alternatively, the imaging assembly 210 includes an area camera. The imaging assembly 210 may generally use a CCD detection system, and form a uniform and stable edge detection method in cooperation with the foregoing uniform lighting manner and conditions such as a light source angle. The front surface of the bent portion of the mylar film is oriented toward the optical signal receiving end of the imaging assembly 210 such as a CCD device, and the CCD device receives the optical signal 2101 reflected from the edge region of the mylar film and converts the optical signal into digital information of the image of the region. In a non-limiting embodiment, the imaging assembly 210 is an area array camera, so that two dimensional imaging is acquired at one time by continuous planar scanning light.

It should be understood that the number of the imaging assemblies 210 is not limited to one as shown in FIG. 2A, and more than one imaging assembly may be disposed. Moreover, the position of the imaging assembly 210 is not limited to the position in FIG. 2A in which the front surface of the signal receiving end faces the edge 1121 of the battery insulation part, and may also face the edge region of the battery insulation part 110 at a predetermined angle. For example, the plurality of imaging assemblies are disposed at preset positions corresponding to the edge 1121 of the battery insulation part in a semi-surrounding manner, to obtain multi-angle imaging of the edge 1121 of the battery insulation part, and a conversion matrix between the plurality of imaging images is determined based on a position relationship of the imaging assemblies, so as to obtain a more accurate edge to be measured by means of multi-image mutual calibration or the like.

Referring to FIG. 3, FIG. 3 is a schematic diagram of imaging an edge of a battery insulation part by an edge detection apparatus for a battery insulation part according to some embodiments of the present application. Based on the arrangement of the light source assemblies and the imaging assemblies 210 described above, the battery cell 120 (not shown in FIG. 3) wrapped by the battery insulation part 110 is imaged. In a non-limiting embodiment, for the battery insulation part 110 that is a mylar film, because of the foregoing uniform configuration during process assembly and imaging, the edge of the mylar film is clearly and stably visible in the imaging, which can alleviate misjudgment of the algorithm. In a non-limiting embodiment, the color of the top cover 130 is a dark color such as black that is not reflective or is less reflective, such that the mylar film illuminated as an overall white color by the light source is significantly different from the color of the top cover 130 and/or the fixing apparatus therein, at which point the edge of the battery insulation part 1121 in the image has a higher contrast of reflectivity over the background of the top cover 130, thereby improving the accuracy of extracting the edge 1121 from the edge image.

In a non-limiting embodiment, an edge detection algorithm may be used to extract the edge of the battery insulation part 1121 from the edge image and calculate the distance d of the edge of the battery insulation part 1121 to the edge of the top cover 1301. The edge detection algorithm may include, but is not limited to, a first order model using a Roberts operator, a Prewitt operator, a Sobel operator, a Canny operator, and the like, and a second order model using a Laplacian operator, and the like. In the embodiment of the present disclosure, by taking the Canny edge detection algorithm as an example, the preprocessing of the edge image includes steps such as image smoothing, calculation of gradient and gradient difference, and non-maximum suppression, so as to perform processing such as blurring, denoising, and edge enhancement on the edge image as much as possible, and find the points of the local maximum value in the gradient image of the imaging result to extract the edge. Such an algorithm can accurately find weak edge points in the image and form precise image edges.

In some embodiments, the battery insulation part obtained by cutting, wrapping, and other processes in the standardization process should have stability and uniformity, that is, the distance d between the edge of the battery insulation part and the edge of the top cover obtained by the edge detection algorithm may be used as a reference value to evaluate whether the imaged edge of the battery insulation part meets the standard. Generally, in response to that the position of the edge to be detected does not meet the preset threshold condition, an error signal indicating that the edge of the insulation part is abnormal is sent out. That is, a threshold may be preset for the distance d, and if the distance d obtained by a certain edge detection does not meet the condition of the preset threshold, it indicates that the current battery insulation part may have abnormalities such as misalignment, unevenness, and welding spot virtual welding. Further, in response to receiving the error signal, the process parameters of the battery insulation part are adjusted. In particular, for the battery insulation part as a mylar film, the process parameters include the cutter spacing (the foregoing 1450) and the stamping pressure, that is, the edge detection result is used to deduce the problems in the process, and the standardization of the process is realized through error feedback.

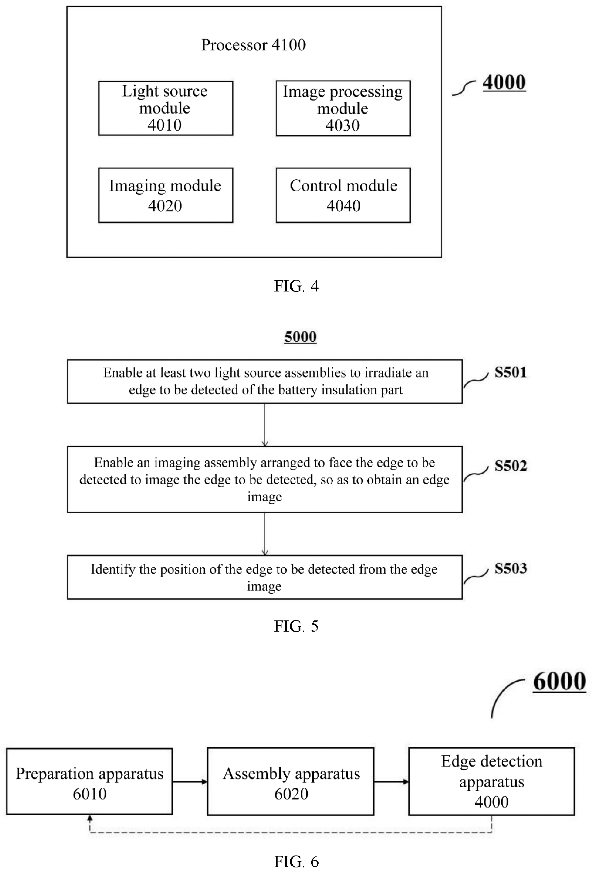

Referring to FIG. 4, FIG. 4 is an exemplary configuration diagram of an edge detection apparatus 4000 for a battery insulation part according to some embodiments of the present application. In some embodiments, the edge detection method for a battery insulation part may be implemented by the edge detection apparatus 4000, and the edge detection apparatus 4000 may include the processor 4100. The processor 4100 of the edge detection apparatus 4000 may provide various functions of the scheduling system. A processor may refer to various implementations of a digital circuitry, an analog circuitry, or a mixed signal (combination of analog and digital) circuitry that perform functions in a computing system. The processing circuit may include, for example, a circuit such as an integrated circuit (IC), an application specific integrated circuit (ASIC), a portion or circuit of a separate processor core, an entire processor core, a separate processor, a programmable hardware device such as a field programmable gate array (FPGA), and/or a system including multiple processors.

In some embodiments, the edge detection apparatus 4000 may further include a memory (not shown in the figure). The memory of the edge detection apparatus 4000 may store information generated by the processor 4100 and processes and data for the processor operation. The memory may be a volatile memory and/or a non-volatile memory. For example, the memory may include, but is not limited to, a random access memory (RAM), a dynamic random access memory (DRAM), a static random access memory (SRAM), a read only memory (ROM), and a flash memory. Generally, the processor may be configured to execute instructions stored on the memory to implement the scheduling method for unit support vehicles as aforementioned.

Specifically, as shown in FIG. 4, in some embodiments, the edge detection apparatus 4000 for a battery insulation part according to the embodiments of the present application may include a light source module 4010, an imaging module 4020, an image processing module 4030, and a control module 4040. It should be understood that the functional modules of the edge detection apparatus 4000 shown in FIG. 4 are only logical modules divided according to the specific functions implemented by the functional modules, and are not intended to limit the specific implementation. In actual implementation, the foregoing modules may be implemented as independent physical entities, or may be implemented by a single entity (for example, a processor (a CPU, a DSP, or the like), an integrated circuit, or the like).

Next, specific operations of the modules of the scheduling system will be described in detail with reference to FIG. 4. As previously described, the light source module 4010 is configured to enable at least two light source assemblies to irradiate the edge to be detected (1121) of the battery insulation part (the foregoing 110). Corresponding to the battery insulation part as a mylar film, the light source module 4010 is configured to irradiate a bent portion of the edge to be detected bent in a direction away from the battery cell, and further includes a first light source assembly (220) that irradiates a first surface (1123) of the bent portion away from the cell and a second light source assembly (230) that irradiates a cross section of the bent portion. In some embodiments, the first light source assembly 220 and the second light source assembly 230 are respectively located on two opposite sides of the imaging assembly in a first direction parallel to the axis of the battery cell. The light source module 4010 is configured to include a white light source such as a white strip light source.

The imaging module 4020 is configured to be arranged in a direction toward the edge of the battery insulation part and image the edge of the battery insulation part to obtain an edge image. In some embodiments, the imaging module 4020 is configured to include one or more charge coupled devices (CCDs) to convert the light signal 2101 reflected from the edge of the battery insulation part and its vicinity into a digital signal. In some other embodiments, especially when the battery insulation part is made of a material such as a mylar film, the imaging module 4020 is further configured to form a bent portion by directing the optical signal receiving end of the imaging module toward an edge of the insulation part.

The image processing module 4030 is configured to identify a location of the edge of the battery insulation part from the edge image. In some embodiments, the image processing module 4030 is further configured to extract an edge of the battery insulation part from the edge image using an edge detection algorithm, and calculate a distance (shown as d in FIG. 3) from the edge of the battery insulation part to an edge of the top cover for fixing the battery cell. In some other embodiments, the image processing module 4030 is further configured to, in response to that the position of the edge of the battery insulation part does not meet the preset threshold condition, send an error signal indicating that the edge of the battery insulation part is abnormal.

In addition, the edge detection apparatus 4000 further includes a control module 4040. The control module 4040 is configured to send control instructions to other functional modules, such as controlling the turn-on or turn-off of the light source module 4010, controlling the position movement or angle change of the light source assembly therein, controlling the turn-on or turn-off of the imaging module 4020, controlling the scanning speed of the CCD component therein, and the like. In some other embodiments, the control module 4040 is further configured to send a control instruction to the external device when the image processing module 4030 sends the error signal, such as controlling the process parameters of the stamping and cutting process, which is helpful to realize the standardization of the assembly and detection process.

In addition, the edge detection apparatus 4000 may further include an input module and an output module (not shown) that are built in or externally connected. The input module may include a device to which various data or instructions are input by a user, an operation device such as a button, a touch pad, a keyboard, a microphone, a switch, and the like, and other devices capable of receiving inputs by methods such as sound and motion. Further, for example, the input module may be a remote control device having infrared light or other radio waves, or may be a mobile device suitable for use in a battery insulation part preparation line. Based on data or instructions input, for example, by a user, the input module generates input signals and supplies the input signals to other functional modules in the edge detection apparatus.

The output module includes a device capable of outputting visual information or auditory information to a user of the edge detection apparatus 4000. For example, the output module includes a display screen, a speaker, a buzzer, a projector, a lamp, and the like. The display device included in the output module may be a device having a general display, or display visual information to other devices, or the like. Based on this, the edge detection apparatus 4000 may display the edge detection algorithm result (such as the distance between the edge of the battery insulation part and the edge of the top cover) and the error signal indicating that the edge of the battery insulation part is abnormal as visual information such as graphic and text data or auditory information such as voice prompt, so that the user can obtain the detection data and adjust the device parameters accordingly.

Next, referring to FIG. 5, FIG. 5 is a flowchart of an edge detection method 5000 for a battery insulation part according to some embodiments of the present application. In step 501, at least two light source assemblies are enabled to irradiate an edge to be detected of a battery insulation part. In step 502, the edge to be detected is imaged by an imaging assembly arranged to face the edge to be detected to obtain an edge image. In step 503, a position of the edge to be detected is identified from the edge image. Details of the above steps 501 to 503 are similar to the description with reference to FIG. 1A and FIG. 2A, and will not be repeated here. It should be understood that division of the steps in FIG. 5 is merely used as an example, and is not intended to limit this embodiment of the present application. These steps may be accomplished by the various modules shown in FIG. 4 individually, two or more of the modules together, or by an external system not shown in cooperation with the illustrated modules, and may be accomplished in steps or in combination.

Referring to FIG. 6, FIG.6 is an exemplary configuration diagram of a battery production line 6000 according to some embodiments of the present application. In some embodiments, the battery production line 6000 includes a preparation device 6010, an assembly apparatus 6020, and an edge detection apparatus 4000 as shown in FIG. 4. The preparation apparatus 6010 is configured to prepare a segment of the battery insulation part, that is, obtain a size sheet for wrapping the battery cell by a processing process including stamping and cutting, and specifically, the segment of the battery insulation part has an edge along a length direction, and the edge includes a bent portion bent from a first surface of the segment of the battery insulation part to a second surface of the segment of the battery insulation part. According to the foregoing, for example, when the material of the battery insulation part is a mylar film, the size sheet manufacturing process causes the battery insulation part to form a bent portion at the position where the cutter (the foregoing 140) is in contact with the die holder (150), the bent portion is bent from the first surface to the second surface, and the edge of the bent portion is the detection object of the edge detection apparatus 4000 in the embodiment of the present application. The assembling apparatus 6020 is configured to wrap the segment of the battery insulation part to the surface of the battery cell of the battery such that the second surface faces away from the battery cell, and fix the edge of the segment to the fixing apparatus of the top cover of the battery cell. The details of the edge detection apparatus 4000 are similar to the apparatus composition and function in FIG. 2A, and will not be repeated here. In particular, the edge detection apparatus 4000 is configured to provide feedback adjustment to the preparation apparatus 6010, that is, based on the distance between the edge of the battery insulation part and the edge of the top cover detected and calculated by the edge detection apparatus 4000, whether the imaged edge of the battery insulation part satisfies the standard is measured. Generally, in response to that the position of the edge to be detected does not meet the preset threshold condition, an error signal indicating that the edge of the insulation part is abnormal is sent out. That is, the distance may be a preset threshold, and if the distance obtained by a certain edge detection does not meet the condition of the preset threshold, an error signal indicating that the insulation part is abnormal may be sent out. Moreover, an error signal is sent as a feedback to the preparation apparatus 6010 to adjust the process parameters of the battery insulation part, such as the cutter spacing and the stamping pressure. Therefore, all links of the battery production line are directly integrated, which enhances the standardization of the process.

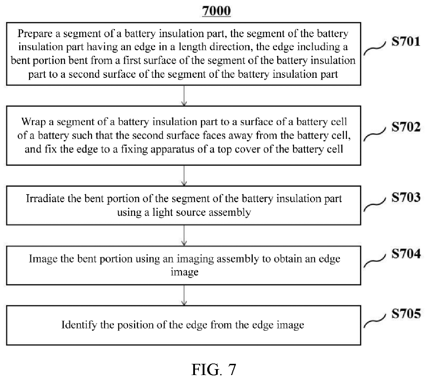

Next, referring to FIG. 7, FIG.7 is a flowchart of a method for manufacturing a battery 7000 according to some embodiments of the present application. In step 701, a segment of a battery insulation part is prepared, the segment of the battery insulation part having an edge along a length direction, the edge including a bent portion bent from a first surface of the segment of the battery insulation part to a second surface of the segment of the battery insulation part. In step 702, the segment of the battery insulation part is wrapped to the surface of the battery cell of the battery such that the second surface faces away from the battery cell, and the edge is fixed to the fixing apparatus of the top cover of the battery cell. In step 703, the bent portion of the segment of the battery insulation part is irradiated using a light source assembly. At step 704, the bent portion is imaged using an imaging assembly to obtain an edge image. In step 705, a position of the edge is identified from the edge image. It may be understood that details of the foregoing steps 703 to 705 are similar to the descriptions of the edge detection method in FIG. 5, and details are not described herein again. It should be understood that division of the steps in FIG. 7 is merely used as an example, and is not intended to limit this embodiment of the present application. These steps may be completed by the apparatuses or components for each production link shown in FIG. 6 individually, two or more of the apparatuses or components together, or by an external system not shown in cooperation with the illustrated modules, and may be completed in steps or in combination.

Finally, it should be noted that: the above embodiments are only used to illustrate the technical solutions of the present application, but not to limit them. Although the present application has been described in detail with reference to the foregoing embodiments, those of ordinary skill in the art should understand that: they can still make modifications on the technical solutions described in the aforementioned embodiments or make equivalent replacements on some or all of the technical features; and these modifications or replacements do not make the essence of the corresponding technical solutions depart from the spirit and scope of the technical solutions of the various embodiments of the present application. All such modifications and replacements should fall within the scope of the claims and specification of the present application. In particular, the technical features mentioned in the embodiments may be combined in any manner provided that no structural conflict is present. The present application is not limited to the specific embodiments disclosed herein, but includes all technical solutions falling within the scope of the claims.

## Claims

1. An edge detection method for a battery insulation part, the battery insulation part being configured to wrap at least a side surface of a battery cell of a battery, the method comprising:
enabling at least two light source assemblies to irradiate a bent portion of an edge to be detected of the insulation part that is bent in a direction away from the battery cell;
enabling an imaging assembly arranged to face the edge to be detected to image the edge to be detected, so as to obtain an edge image, wherein an optical signal receiving end of the imaging assembly faces a first surface of the bent portion away from the battery cell; and
identifying a position of the edge to be detected from the edge image.

2. The edge detection method according to claim 1, wherein the at least two light source assemblies comprise a first light source assembly that irradiates a first surface of the bent portion away from the battery cell and a second light source assembly that irradiates a cross-section of the bent portion.

3. The edge detection method according to claim 1 or 2, wherein the at least two light source assemblies simultaneously irradiate the bent portion from both vertical sides of the bent portion.

4. The edge detection method according to any one of claims 1 to 3, wherein the first light source assembly and the second light source assembly are respectively located on two opposite sides of the imaging assembly in a first direction parallel to an axis of the battery cell.

5. The edge detection method according to any one of claims 1 to 4, wherein the first light source assembly is arranged such that an included angle between an emitted first light beam and the first direction is a first angle, and the second light source assembly is arranged such that an included angle between an emitted second light beam and the first direction is a second angle, the first angle being smaller than the second angle.

6. The edge detection method according to any one of claims 1 to 5, wherein the identifying a position of the edge to be detected from the edge image comprises:
extracting the edge to be detected from the edge image by using an edge detection algorithm; and
calculating a distance from the edge to be detected to an edge of a top cover of a battery, wherein a housing of the battery comprises a shell and the top cover.

7. The edge detection method according to any one of claims 1 to 6, wherein the extracting the edge to be detected from the edge image using an edge detection algorithm comprises:
preprocessing the edge image, the preprocessing comprising: image smoothing, gradient and gradient difference calculation, and non-maximum suppression.

8. The edge detection method according to any one of claims 1 to 7, further comprising:
in response to that the distance does not meet a preset threshold condition, sending an error signal indicating that an edge of the insulation part is abnormal.

9. The edge detection method according to any one of claims 1 to 8, further comprising:
in response to receiving the error signal, adjusting a process parameter of the insulation part.

10. A method for manufacturing a battery, comprising:
preparing a segment of a battery insulation part, which has an edge in a length direction, the edge comprising a bent portion bent from a first surface of the segment of the battery insulation part to a second surface of the segment of the battery insulation part;
wrapping the segment of the battery insulation part to a surface of a battery cell of a battery such that the second surface faces away from the battery cell, and fixing the edge to a fixing apparatus of a top cover of the battery cell; and
performing the edge detection method for a battery insulation part according to any one of claims 1 to 9.

11. The method for manufacturing a battery according to claim 10, wherein the preparing the segment of the insulation part of the battery comprises stamping and cutting the insulation part such that the edge has the bent portion.

12. The method for manufacturing a battery according to claim 10 or 11, wherein the method further comprises:
calculating a distance from the edge to an edge of the top cover away from the battery cell based on a position of the edge; and
in response to that the distance does not meet a preset threshold condition, sending an error signal indicating that an edge of the insulation part is abnormal.

13. The method for manufacturing a battery according to any one of claims 10 to 12, wherein in response to receiving the error signal, a process parameter for stamping and cutting the insulation part is adjusted.

14. The method for manufacturing a battery according to any one of claims 10 to 13, wherein the process parameter comprises a cutter spacing and a stamping pressure.

15. The method for manufacturing a battery according to any one of claims 10 to 14, wherein a color of the segment of the battery insulation part is different from a color of the fixing apparatus of the top cover.

16. A battery production line, comprising:
a preparation apparatus, configured to prepare a segment of a battery insulation part, the segment of the insulation part having an edge in a length direction, the edge comprising a bent portion that is bent from a first surface of the segment of the battery insulation part to a second surface of the segment of the battery insulation part;
an assembly apparatus, configured to wrap the segment of the battery insulation part to a surface of a battery cell of a battery such that the second surface faces away from the battery cell, and fix the edge to a fixing apparatus of a top cover of the battery cell; and
an edge detection apparatus that performs the edge detection method for a battery insulation part according to any one of claims 1 to 9.
